(19) Europäisches Patentamt
European Patent Office
Office européen des brevets

(11) **EP 4 068 173 A1**

(12) **EUROPEAN PATENT APPLICATION**
published in accordance with Art. 153(4) EPC

(43) Date of publication:
**05.10.2022 Bulletin 2022/40**

(21) Application number: **19945404.2**

(22) Date of filing: **29.11.2019**

(51) International Patent Classification (IPC):
***G06Q 10/06*** (2012.01)

(52) Cooperative Patent Classification (CPC):
**G05B 19/41875; G05B 23/0237; G06N 5/003;
G06N 20/20; G06Q 10/06395; G06Q 50/04;**
G05B 2219/31314; G05B 2219/32221;
G05B 2219/32222; Y02P 90/02; Y02P 90/30

(86) International application number:
**PCT/CN2019/121907**

(87) International publication number:
**WO 2021/102891 (03.06.2021 Gazette 2021/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **BOE Technology Group Co., Ltd.
Beijing 100015 (CN)**

(72) Inventors:
• **LAN, Tian
Beijing 100176 (CN)**

• **WANG, Hong
Beijing 100176 (CN)**
• **CHAI, Dong
Beijing 100176 (CN)**
• **WU, Haohan
Beijing 100176 (CN)**
• **SHEN, Guoliang
Beijing 100176 (CN)**
• **LIU, Weihe
Beijing 100176 (CN)**

(74) Representative: **Cohausz & Florack
Patent- & Rechtsanwälte
Partnerschaftsgesellschaft mbB
Bleichstraße 14
40211 Düsseldorf (DE)**

(54) **SYSTEM AND METHOD FOR ANALYZING CAUSE OF PRODUCT DEFECT AND COMPUTER-READABLE MEDIUM**

(57)    A system for analyzing cause of product defect, including: a distributed storage device configured to store production data generated by a factory device; an analysis device including one or more processors configured to perform following operations to determine a correlation: acquiring a production record from the production data stored in the distributed storage device; the production record includes information of processing devices by which a plurality of products are processed during production procedures for producing the products and information of defects occurring, where each product is processed by multiple processing devices in the production procedure, and each processing device participates in only the production procedures of a portion of the products; determining a correlation weight of the processing device to be analyzed in the processing devices corresponding to a defect to be analyzed according to the production record, and determining a correlation between the processing device to be analyzed and the defect to be analyzed according to the correlation weight; a display device configured to display an analysis result of the analysis device.

acquiring a production record from the production data stored in the distributed storage device — S101

determining a correlation weight of the processing device to be analyzed in the processing devices corresponding to the defect to be analyzed according to the production record, and determining the correlation between the processing device to be analyzed and the defect to be analyzed according to the correlation weight — S102

Fig. 4

**Description**

**TECHNICAL FIELD**

Embodiments of the present disclosure relate to the field of manufacturing display panels, in particular to a system and a method for analyzing cause of product defect and a computer readable medium.

**BACKGROUND**

Multiple processing devices are generally required to perform processes in sequence during a procedure of manufacturing a display panel. Meanwhile, the display panel finally obtained inevitably has various defects with a certain probability, and the defects are fundamentally caused by the processing devices.

Therefore, a method for determining a correlation between a processing device and a defect has important significance for positioning the defect, adjusting a production procedure and the like.

**SUMMARY**

Embodiments of the present disclosure provide a system and a method for analyzing cause of product defect and a computer readable medium.

In a first aspect, an embodiment of the present disclosure provides a system for analyzing cause of product defect, including: a distributed storage device, an analysis device, and a display device, where,

the distributed storage device is configured to store production data generated by a factory device;

the analysis device includes one or more processors configured to perform following operations to determine a correlation:

acquiring a production record from the production data stored by the distributed storage device; the production record includes information of processing devices by which a plurality of products are processed during production procedures for producing the products and information of defects occurring, where each of the products is processed by multiple ones of the processing devices during the production procedure, and each of the processing devices participates in only the production procedures for producing a portion of the products;

determining a correlation weight of the processing device to be analyzed in the processing devices corresponding to a defect to be analyzed according to the production record, and determining a correlation between the processing device to be analyzed and the defect to be analyzed according to the correlation weight;

the display device is configured to display an analysis result of the analysis device.

In some implementations, the determining the correlation weight of the processing device to be analyzed in the processing devices corresponding to the defect to be analyzed includes:

for each processing device to be analyzed, taking the products which are processed by the processing device to be analyzed in the production procedures as a first group, and taking the products which are not processed by the processing device to be analyzed in the production procedures as a second group; and

for each processing device to be analyzed, determining a sub-correlation weight of the first group and a sub-correlation weight of the second group.

In some implementations, the sub-correlation weight $Q_i$ of the $i^{th}$ group is calculated by the following formula:

$$Q_i = \ln\left(\frac{G_i/G_{total}}{B_i/B_{total}}\right);$$

where i is 1 or 2, $G_i$ is the number of the products with the defect to be analyzed in the $i^{th}$ group, $G_{total}$ is the number of all the products with the defect to be analyzed, $B_i$ is the number of the products without the defect to be analyzed in the $i^{th}$ group, and $B_{total}$ is the number of all the products without the defect to be analyzed.

In some implementations, the determining the correlation between the processing device to be analyzed and the defect to be analyzed according to the correlation weight includes:

for each processing device to be analyzed, determining the correlation between the processing device to be analyzed and the defect to be analyzed according to a sum of the sub-correlation weight of the first group and the sub-correlation weight of the second group.

In some implementations, the determining the correlation between the processing device to be analyzed and the defect to be analyzed according to the correlation weight includes:

for each processing device to be analyzed, determining a value parameter according to the sub-correlation weight of the first group and the sub-correlation weight of the second group, and determining the correlation between the processing device to be analyzed and the defect to be analyzed according to the value parameter.

In some implementations, the value parameter J is calculated by the following formula:

$$J = \sum J_i \text{ , where } J_i = \left( DG_i - DB_i \right) * Q_i;$$

$Q_i$ is the sub-correlation weight of the $i^{th}$ group, i is 1 or 2, $DG_i$ is a proportion of the products with the defect to be analyzed in the $i^{th}$ group to all the products with the defect to be analyzed, and $DB_i$ is a proportion of the products without the defect to be analyzed in the $i^{th}$ group to all the products without the defect to be analyzed.

In some implementations, the determining the correlation weight of the processing device to be analyzed in the processing devices corresponding to the defect to be analyzed includes:

determining at least a portion of the processing devices as the processing devices to be analyzed corresponding to the defect to be analyzed according to a preset corresponding relation.

In some implementations, the production record further includes: parameter values of at least a portion of process parameters used by at least a portion of the processing devices, by which the product is processed during the production procedure, for processing the product; and

after acquiring the production record from the production data stored in the distributed storage device, a preset machine learning model is configured to perform: determining the correlation between at least the portion of process parameters used by at least the portion of the processing devices and the defect to be analyzed, according to the production record.

In some implementations, the machine learning model includes any one of a random forest model, a gradient-boosted tree model, and an XGBoost model.

In some implementations, the determining the correlation between at least the portion of process parameters used by at least the portion of the processing devices and the defect to be analyzed is performed during determining the correlation between the processing device to be analyzed and the defect to be analyzed according to the correlation weight;

the determining the correlation between at least the portion of process parameters used by at least the portion of the processing devices and the defect to be analyzed includes: determining the processing device to be analyzed, which has a correlation with the defect to be analyzed greater than a first preset value or ranked before a first preset position, as a key processing device to be analyzed, and only determining the correlation between at least the portion of process parameters of the key processing device to be analyzed and the defect to be analyzed.

In some implementations, after determining the correlation between at least the portion of process parameters used by at least the portion of the processing devices and the defect to be analyzed, determining a recommended parameter value range for at least a portion of the process parameters according to the correlation between the process parameters and the defect to be analyzed.

In some implementations, the determining the recommended parameter value range for the at least the portion of the process parameters includes:

determining the process parameter which has a correlation with the defect to be analyzed greater than a second preset value or ranked before a second preset position, as a key process parameter to be analyzed, and only determining the recommended parameter value range of the key process parameter to be analyzed.

In some implementations, the product is a display panel.

In a second aspect, an embodiment of the present disclosure provides a method for analyzing cause of product defect, including:

determining a correlation weight of a processing device to be analyzed in a plurality of processing devices corresponding to a defect to be analyzed according to a production record, and determining a correlation between the processing device to be analyzed and the defect to be analyzed according to the correlation weight; the production record includes information of processing devices by which a plurality of products are processed during production procedures for producing the products and information of defects occurring, where each of the products is processed by multiple ones of the processing devices during the production procedure, and each of the processing devices participates in only the production procedures for producing a portion of the products.

In some implementations, the determining the correlation weight of the processing device to be analyzed in the processing devices corresponding to the defect to be analyzed, and determining the correlation between the processing device to be analyzed and the defect to be analyzed according to the correlation weight includes:

for each processing device to be analyzed, taking the products which are processed by the processing device to be analyzed in the production procedures as a first group, and taking the products which are not processed by the processing device to be analyzed in the production procedures as a second group;

for each processing device to be analyzed, determining a sub-correlation weight of the first group and a sub-correlation weight of the second group;

for each processing device to be analyzed, determining the correlation between the processing device to be analyzed and the defect to be analyzed according to a sum of the sub-correlation weight of the first group and the sub-correlation weight of the second group.

In some implementations, the sub-correlation weight $Q_i$ of the $i^{th}$ group is calculated by the following formula:

$$Q_i = \ln\left(\frac{G_i/G_{total}}{B_i/B_{total}}\right);$$

where i is 1 or 2, $G_i$ is the number of the products with the defect to be analyzed in the $i^{th}$ group, $G_{total}$ is the number of all the products with the defect to be analyzed, $B_i$ is the number of the products without the defect to be analyzed in the $i^{th}$ group, and $B_{total}$ is the number of all the products without the defect to be analyzed.

In some implementations, the determining the correlation weight of the processing device to be analyzed in the processing devices corresponding to the defect to be analyzed, and determining the correlation between the processing device to be analyzed and the defect to be analyzed according to the correlation weight includes:

for each processing device to be analyzed, taking the products which are processed by the processing device to be analyzed in the production procedures as a first group, and taking the products which are not processed by the processing device to be analyzed in the production procedures as a second group;

for each processing device to be analyzed, determining a sub-correlation weight of the first group and a sub-correlation weight of the second group;

for each processing device to be analyzed, determining a value parameter according to the sub-correlation weight of the first group and the sub-correlation weight of the second group, and determining the correlation between the processing device to be analyzed and the defect to be analyzed according to the value parameter;

the value parameter J is calculated by the following formula:

$$J = \sum J_i, \text{ where } J_i = \left(DG_i - DB_i\right)*Q_i;$$

$Q_i$ is the sub-correlation weight of the $i^{th}$ group, i is 1 or 2, $DG_i$ is a proportion of the products with the defect to be analyzed in the $i^{th}$ group to all the products with the defect to be analyzed, and $DB_i$ is a proportion of the products without the defect to be analyzed in the $i^{th}$ group to all the products without the defect to be analyzed.

In some implementations, the production record further includes: parameter values of at least a portion of process parameters used by at least a portion of the processing devices, by which the product is processed during the production procedure, for processing the product;

the method further includes:

determining, by a preset machine learning model, the correlation between at least the portion of process parameters used by at least the portion of the processing devices and the defect to be analyzed, according to the production record.

In some implementations, the method further includes: after determining the correlation between at least the portion of process parameters used by at least the portion of the processing devices and the defect to be analyzed, determining a recommended parameter value range for at least a portion of the process parameters according to the correlation between the process parameters and the defect to be analyzed.

In a third aspect, an embodiment of the present disclosure provides a computer readable medium storing a computer program, which, when being executed by a processor, implements the method for analyzing cause of product defect described above.

## DESCRIPTION OF DRAWINGS

The accompanying drawings are included to provide a further understanding of embodiments of the present disclosure, and constitute a part of the specification, and serve to explain principles of the present disclosure together with the embodiments of the present disclosure but do not limit the present disclosure. Above and other features and advantages will become more apparent to those skilled in the art by describing in detail exemplary embodiments with reference to the attached drawings, in which:

Fig. 1 is a block diagram illustrating a system for analyzing cause of product defect according to an embodiment of the present disclosure;
Fig. 2 is a block diagram of an analysis device in a system for analyzing cause of product defect according to an embodiment of the present disclosure;
Fig. 3 is a schematic diagram illustrating a data flow direction in a system for analyzing cause of product defect according to an embodiment of the present disclosure;
Fig. 4 is a flowchart illustrating operations performed by an analysis device in a system for analyzing cause of product defect according to an embodiment of the present disclosure;
Fig. 5 is a flowchart illustrating operations performed by an analysis device in a system for analyzing cause of product defect according to another embodiment of the present disclosure;
Fig. 6 is a flowchart illustrating operations performed by an analysis device in a system for analyzing cause of product defect according to another embodiment of the present disclosure;
Fig. 7 is a schematic diagram of value parameters of a portion of processing devices in an embodiment of the present disclosure;
Fig. 8 is a schematic diagram illustrating a correlation between a portion of process parameters and a defect to be analyzed according to an embodiment of the present disclosure;
Fig. 9 is a schematic diagram illustrating statistical probabilities for a process parameter within different predetermined ranges according to an embodiment of the present disclosure;
Fig. 10 is a flowchart of a method for analyzing cause of product defect according to an embodiment of the present disclosure;
Fig. 11 is a flowchart of a method for analyzing cause of product defect according to another embodiment of the present disclosure;
Fig. 12 is a flowchart of a method for analyzing cause of product defect according to another embodiment of the present disclosure; and
Fig. 13 is a block diagram of a computer storage medium according to an embodiment of the present disclosure.

## DESCRIPTION OF EMBODIMENTS

In order to make those skilled in the art better understand technical solutions of the embodiments of the present disclosure, the following describes the system, the method and the computer readable medium for analyzing cause of product defect according to the embodiments of the present disclosure in detail with reference to the accompanying drawings.

The embodiments of the present disclosure will be described more fully hereinafter with reference to the accompanying drawings, but the embodiments may be embodied in different forms and should not be construed as limited to those set forth herein. Rather, the embodiments are provided so that the present disclosure will be thorough and complete, and will fully convey the scope of the present disclosure to those skilled in the art.

Embodiments of the present disclosure may be described with reference to plan and/or cross-sectional views by way of idealized schematic illustrations of the present disclosure. Accordingly, the example illustrations may be modified in accordance with manufacturing techniques and/or tolerances.

Embodiments of the present disclosure and features of the embodiments may be combined with each other without conflict.

Terminologies used in the present disclosure are for the purpose of describing particular embodiments only and are not intended to be limiting of the present disclosure. As used in the present disclosure, the term "and/or" includes any and all combinations of one or more of the associated listed items. As used in the present disclosure, the singular forms "a", "an" and "the" are intended to include the plural forms as well, unless the context clearly indicates otherwise. The terms "include", "contain" and variants thereof as used in the present disclosure, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used in the present disclosure have the same meanings as commonly understood by those ordinary skill in the art. It will be further understood that terms, such as those defined in commonly used dictionaries, should be interpreted as having a meaning that is consistent with their meaning in the context of the related art and the present disclosure, and will not be interpreted in an idealized or overly formal sense unless expressly so defined herein.

Embodiments of the present disclosure are not limited to the embodiments shown in the drawings, but include configuration modifications formed based on a manufacturing process. Thus, regions illustrated in the drawings have schematic properties, and shapes of the regions shown in the drawings illustrate specific shapes of the regions of elements, but are not intended to be limiting.

Many products, such as display panels, are produced through production lines, each of the production lines includes a plurality of process stations, and each of the process stations is used to perform a certain processing (e.g., cleaning, deposition, exposure, etching, cartridge-loading, inspection, etc.) on the products, including semi-finished products. Meanwhile, each process station generally has a plurality of processing devices for performing the same processing; certainly, although the processing is theoretically the same, actual processing effects are not completely the same due to differences in model, state, etc. between different processing devices.

Each product needs to pass through a plurality of process stations during the production procedure, and process stations passed by different products in the production procedures may be different; further, products passing through the same process station may be processed by different processing devices therein. Thus, in one production line, each processing device participates in the production procedures of a portion of the products, but does not participate in the production procedures of all of the products, i.e. each processing device must participate in only the production procedures of a portion of the products.

In a first aspect, an embodiment of the present disclosure provides a system for analyzing cause of product defect.

The system according to the embodiment of the present disclosure can determine a correlation between the processing devices in the production line and various defects of product, namely, determine cause of product defect, so as to position the defect and adjust the production procedure and the like.

The term "defect" refers to a quality defect of the product that may lead to a reduction in quality of the product or even lead to the product to be rejected, or may lead to the product needing to be reworked or repaired.

Defects may be classified into various types as required. For example, the defects may be classified according to their direct effects on performances of the products, such as bright line defects, dark line defects, hot spot defects, and the like; alternatively, the defects may be classified according to specific causes of the defects, such as defects of short circuit between a gate line and a data line, alignment defects, and the like; alternatively, the defects may be classified according to general causes of the defects, such as defects caused by an array process, and the like; alternatively, defects may be classified according to severities of the defects, such as defects leading to scrap, defects leading to reduced quality, and the like; alternatively, the defects may not be classified, that is, a product is considered to have a defect if any defect exists, and is considered to have no defect if no defect exists.

Certainly, the above correlation is for "one" type of defects, i.e., the same processing device has different correlations with respect to different types of defects.

The term "a correlation between a processing device and a defect" means a degree of influence of participation of the processing device on occurrence probability of the defect in a product.

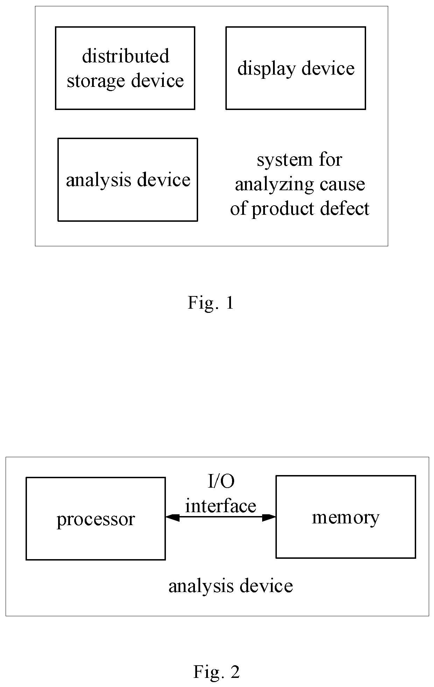

Referring to Fig. 1, a system for analyzing cause of product defect according to an embodiment of the present disclosure includes a distributed storage device, an analysis device, and a display device.

The distributed storage device is configured to store production data generated by a factory device.

The analysis device includes one or more processors configured to perform operations to determine a correlation.

The display device is configured to display an analysis result of the analysis device.

The distributed storage device stores therein production data obtained from the factory device. The factory device refers to any device in each factory, and may include processing devices in process stations, a management device for managing a production line in the factory, and the like; the production data refers to any information related to production, including which production lines of products are participated in by each processing device, and whether and what types of defects exist in each product.

Referring to Fig. 2, the analysis device includes a processor (e.g., CPU) having data processing capability, and may further include a memory (e.g., hard disk) storing a desired program, and the processor is coupled to the memory via an I/O interface to enable information interaction, whereby the processor can perform a desired operation according to the program stored in the memory to implement the operation of determining the correlation.

The display device has a display function for displaying the analysis result (such as the correlation) calculated by the analysis device.

The distributed storage device stores relatively complete data (such as a database), and the distributed storage device includes a plurality of hardware memories, and different hardware memories are distributed at different physical locations (such as different factories or different production lines), and mutually transmit information through a network, so that the data are in a distributed relationship, but logically form a database based on big data technology.

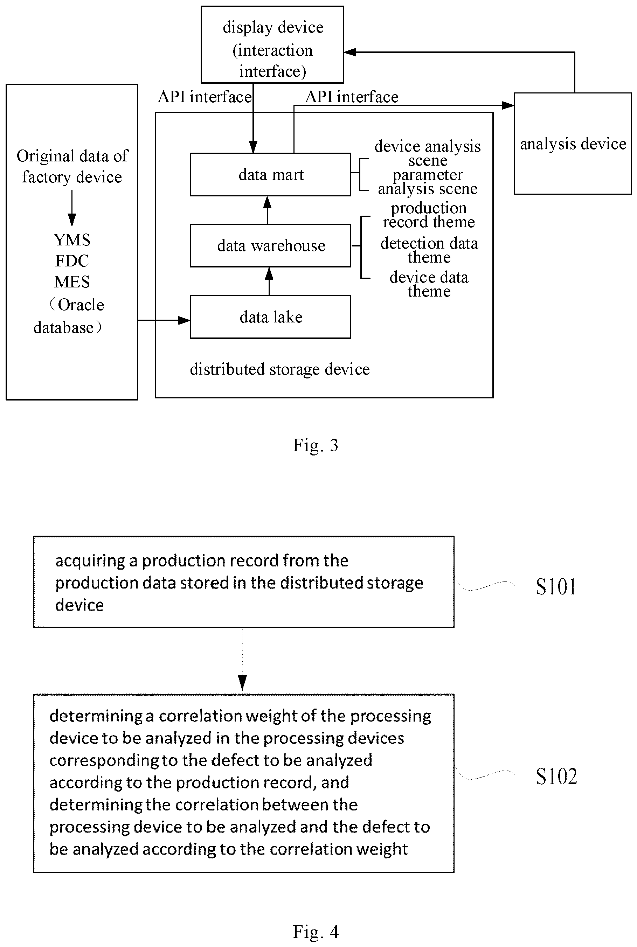

Referring to Fig. 3, large amount of raw data of different factory devices are stored in corresponding manufacturing systems, such as relational databases (such as Oracle, Mysql, etc.) of YMS (Yield Management System), FDC (Fault Detection and Classification), MES (Manufacturing Execution System), etc., and raw table extraction may be performed on the raw data by a data extraction tool (such as Sqoop, keyle, etc.) to transmit the raw data to the distributed storage device (such as Hadoop Distributed File System, HDFSHadoop Distributed File System, HDFS), so as to reduce load on the factory devices and the manufacturing systems, and facilitate subsequent data reading of the analysis device.

Data in the distributed storage device may be stored by Hive tool or stored in Hbase database format. For example, according to the Hive tool, the above raw data is first stored in a data lake; and then, preprocessing such as data cleansing and data conversion can be performed in the Hive tool according to application themes, scenes and the like of the data, so that a data warehouse with different themes (such as a production record theme, a detection data theme and a device data theme) and a data mart with different scenes (such as a device analysis scene and a parameter analysis scene) are obtained. The data mart may be coupled to the display device, the analysis device and the like through different API interfaces so as to realize data interaction there-between.

Since a plurality of factory devices in a plurality of factories are related, data amount of the above raw data is relatively large. For example, all factory devices may produce hundreds of Gigabytes of raw data per day and tens of Gigabytes of data per hour.

There are mainly two schemes for realizing storage and calculation of massive structured data: a grid computing scheme for RDBMS (Relational Database Management System, RDBMS); a big data scheme of Distributed File management System (DFS).

The grid computing scheme for the RDBMS divides a problem requiring huge computing power into a plurality of small parts, distributes the small parts to a plurality of computers for processing respectively, and finally integrates computing results. For example, as a specific example, Oracle RAC (real application cluster) is a core technology of the grid computing scheme supported by an Oracle database, where all servers can direct access to all data in the database. However, an application system of the grid computing scheme for the RDBMS cannot meet user's requirements when the data amount is relatively large, for example, due to limited expansion space of hardware, an efficiency of processing data would be very low due to bottleneck of input/output of a hard disk after the data is increased to a large enough order.

Distributed file management is a basic big data technology, which allows a large cluster to be constructed by adopting a plurality of cheap hardware devices so as to process mass data. For example, the Hive tool is a data warehouse tool based on Hadoop and can be used for data extraction, transformation and loading (ETL), the Hive tool defines a simple SQL-like query language and allows complex analysis work which cannot be completed by default tools through a mapper and a reducer of customized MapReduce. The Hive tool has no special limiting to a data format to be stored and no index for data, and a user can freely organize a table in the Hive tool to process data in a database. Therefore, a parallel processing of the distributed file management can meet storage and processing requirements of mass data, a user can query and process simple data through SQL, and a user-defined function can be adopted for complex processing. Therefore, when analyzing mass data of a factory, data of a database of the factory needs to be extracted into a distributed file system, so that, on one hand, raw data cannot be damaged, and on the other hand, an efficiency of data analysis is improved.

The display device may include one or more displays, for example include one or more terminals having a display function, so that the analysis device may transmit the correlation obtained by the analysis device to the display device, and the display device can display the correlation.

In some implementations, the display device may further be used to display an "interactive interface", which may include a sub-interface for displaying the analysis results (e.g., correlation), a sub-interface for controlling the system for analyzing cause of product defect to perform required works (e.g., task setting), and a sub-interface for controlling each processing device (e.g., setting process parameters of the processing device).

That is, through the "interactive interface" of the display device, it is possible to achieve complete interaction (control and reception of results) between a user and the system for analyzing cause of product defect.

In the embodiment of the present disclosure, the distributed storage device can efficiently realize collection and preliminary processing of the raw data of a plurality of factory devices in a big data mode, and the analysis device can conveniently acquire required data from the distributed storage device so as to calculate the correlation between the processing device and the defect and display the correlation by the display device. Therefore, the embodiment of the present disclosure can automatically analyze the cause of product defect so as to position the defect, adjust the production procedure and the like.

In some implementations, the product is a display panel.

The embodiment of the present disclosure can be used for determining the correlation between each processing device in a production line for producing a display panel (such as a liquid crystal display panel, an organic light emitting diode display panel and the like) and a defect during the production procedure of the display panel.

Certainly, the embodiment of the present disclosure may be used for other products as well.

Referring to Fig. 4, in some implementations, operations performed by the one or more processors of the above analysis device to determine the correlation may include following steps S101 and S102.

S101, acquiring a production record from the production data stored in the distributed storage device.

The production record includes information of processing devices by which a plurality of products are processed during production procedures for producing the products and information of defect occurring, where each product goes through multiple processing devices during the production procedure, and each of the processing devices participates in only the production procedure for producing a portion of the products.

A part of the production data stored in the distributed storage device is acquired as the production record. The production record includes information about which processing device the products (e.g., products produced in a single production line) have gone through during the production procedure (information about the processing device that the products have gone through during the production procedure), and whether or not the products have a defect and what defect the products have (information about the defect of the products).

As above, based on characteristics of the production line, each processing device in the production record above should participate in production of a portion of the products, but not participate in production of all of the products.

For example, a part of the information of the production record may be as shown in the following table 1.

TABLE 1, production history of product and defect relation table

| Product number | Processing device 01 | Processing device 03 | Processing device 05 | Processing device 06 | | S010 defect | N011 defect | .. |
|---|---|---|---|---|---|---|---|---|
| AK880885A0 | 0 | 1 | 1 | 1 | | 0 | 0 | .. |
| AK880885A1 | 0 | 1 | 1 | 1 | | 0 | 0 | .. |
| AK880885A2 | 0 | 1 | 1 | 1 | | 0 | 0 | .. |
| AK880885A3 | 0 | 1 | 1 | 1 | | 0 | 0 | .. |
| AK880885A4 | 1 | 1 | 1 | 1 | | 0 | 0 | .. |
| AK880885B3 | 1 | 0 | 0 | 1 | | 0 | 0 | .. |
| AK880885B4 | 1 | 0 | 0 | 1 | | 0 | 1 | .. |
| AK880885B6 | 1 | 0 | 1 | 1 | | 0 | 0 | .. |
| AK880885B7 | 1 | 0 | 1 | 1 | | 0 | 1 | .. |
| ... | ... | ... | ... | ... | | ... | ... | .. |

A table entry of a certain processing device corresponding to each product being "1" indicates that the product goes through the processing device in the production procedure, and being "0" indicates that the product are not processed by the processing device in the production procedure; a table entry of a certain defect corresponding to each product being "1" indicates that the product has the defect, and being "0" indicates that the product does not have the defect.

In some implementations, the production record may be pre-data-cleaned.

By data cleansing, integrity and accuracy of input data of a related algorithm can be ensured, so that a subsequent calculation process is facilitated. Illustratively, data cleansing, including but not limited to missing value processing, invalid column deleting, etc., may be used to resolve problems of missing, redundant, etc., present in the data.

Specifically, the above data cleansing may be performed after the analysis device extracting the data, or may also be performed by the distributed storage device on the data in the data mart.

In some implementations, the production record further includes: parameter values of at least a portion of process parameters used by at least a portion of the processing devices, that the product goes through during the production procedure, for processing the product.

That is, the parameter values of the process parameters used by each processing device for processing each product, such as a temperature value of a temperature parameter, a pressure value of an air pressure parameter, and a power value of a power parameter, may be recorded.

For example, a part of the information of the production record may be as shown in the following table 2.

EP 4 068 173 A1

TABLE 2 relationship between process parameters of a certain processing device and products

| Product number | process parameter 1 | process parameter 2 | process parameter 3 | ... |
|---|---|---|---|---|
| AK890545A1 | 1786 | 124 | 117 | ... |
| AK890545A2 | 1786 | 121 | 109 | ... |
| DD890233A3 | 1786 | 119 | 114 | ... |
| DD890233A4 | 1786 | 119 | 110 | ... |
| AK890545A1 | 1778 | 120 | 108 | ... |
| DD890233A3 | 1778 | 115 | 108 | ... |
| AK890545B3 | 1778 | 117 | 106 | ... |
| ... | ... | ... | ... | ... |

S102, determining a correlation weight of the processing device to be analyzed in the processing devices corresponding to the defect to be analyzed according to the production record, and determining the correlation between the processing device to be analyzed and the defect to be analyzed according to the correlation weight.

After the production record is acquired, at least a portion of the processing devices are selected as the processing devices to be analyzed, correlations of which need to be determined, correlation weights of the processing devices to be analyzed corresponding to specific types of defects to be analyzed are calculated, and finally, correlations between the processing devices to be analyzed and the defects to be analyzed are obtained.

In this step, the correlation between the processing device and a certain defect to be analyzed is calculated each time, and when the correlation corresponding to a certain defect to be analyzed is calculated, a "defect" in the data refers to the defect to be analyzed (i.e., other types of defects are not considered as defects). Thus, if it is desired to calculate correlations between the processing device and multiple types of defects, it is necessary to execute the present step a plurality of times by using data for the multiple types of defects, respectively.

The term "correlation weight of the processing device to be analyzed corresponding to the defect to be analyzed " is calculated according to the number of the products with or without the defect among the products of which the production procedures are participated or not participated in by the processing device, can represent a weight attribute of influence of the processing device to be analyzed on occurrence probability of the defect to be analyzed, and is related to the correlation between the processing device to be analyzed and the defect to be analyzed.

The term "correlation between the processing device to be analyzed and the defect to be analyzed" refers to a degree of influence of participation of the processing device to be analyzed on probability that the defect to be analyzed occurs in the product.

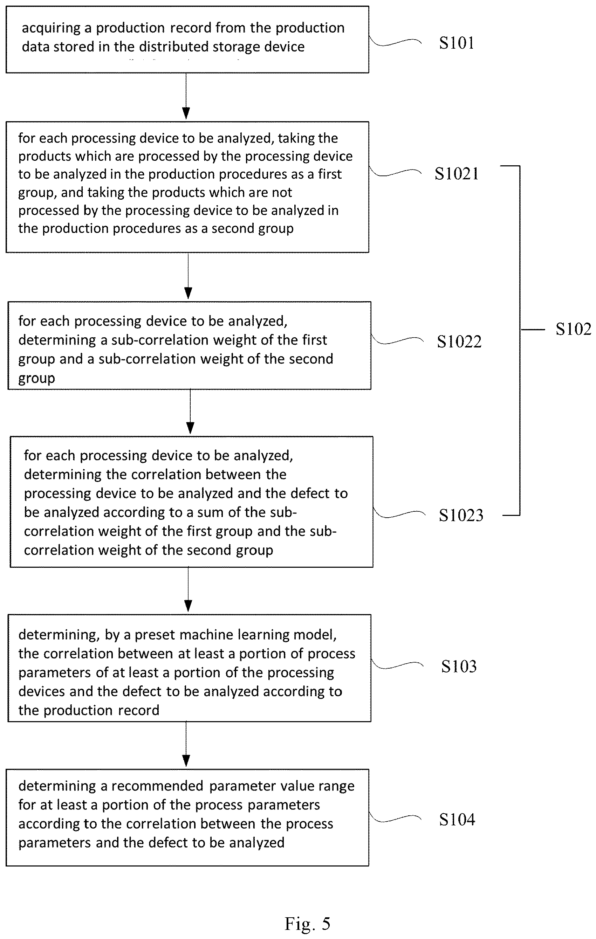

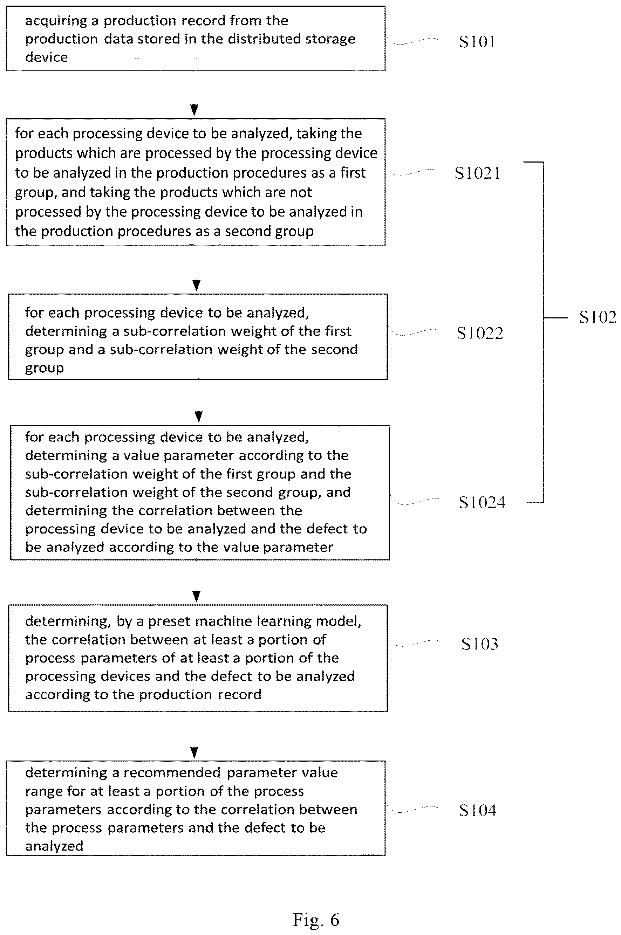

In some implementations, referring to Figs. 5 and 6, the step (S102) may include steps S1021 and S1022.

S1021, for each processing device to be analyzed, taking the products which are processed by the processing device to be analyzed in the production procedures as a first group, and taking the products which are not processed by the processing device to be analyzed in the production procedures as a second group.

For each processing device to be analyzed, all products are divided into two groups according to whether the processing device participates in the production procedures of the products, the products of the first group are processed by the processing device to be analyzed, and the products of the second group are not processed by the processing device to be analyzed.

S1022, for each processing device to be analyzed, determining a sub-correlation weight of the first group and a sub-correlation weight of the second group.

The sub-correlation weights of the two groups are calculated according to the data of the two groups.

In some implementations, the sub-correlation weight $Q_i$ of the $i^{th}$ group is calculated by the following formula:

$$Q_i = \ln\left(\frac{DG_i}{DB_i}\right) = \ln\left(\frac{G_i/G_{total}}{B_i/B_{total}}\right);$$

where i represents the number of the group, and is 1 or 2, namely corresponding to the first group or the second group;

DGi is a proportion of the products with the defect to be analyzed in the $i^{th}$ group to all the products with the defect to be analyzed, and DBi is a proportion of the products without the defect to be analyzed in the $i^{th}$ group to all the products without the defect to be analyzed; Gi is the number of the products with the defect to be analyzed in the $i^{th}$ group, and $G_{total}$ is the number of all the products with the defect to be analyzed; Bi is the number of the products without the defect to be analyzed in the $i^{th}$ group, and $B_{total}$ is the number of all the products without the defect to be analyzed.

The correlation weight can be calculated according to the above sub-correlation weights Qi, can represent influence capability of a variable (such as whether the processing device participates in the production procedure of the product) on a result (such as whether the product has the defect), and specifically, the greater the absolute value of the correlation weight (the correlation weight may be positive or negative) is, the greater the influence capability is.

Specifically, the correlation weight in the embodiment of the present disclosure can represent influence capability of the processing device to be analyzed on the defect to be analyzed. Therefore, by sequencing absolute values of correlation weights of the processing devices to be analyzed, which processing device to be analyzed is more likely to cause the defect to be analyzed can be determined, so that positioning of the defect, adjusting of the production procedure and the like are facilitated.

When calculating the sub-correlation weights, it is necessary to group the raw data according to situations, and then calculate the sub-correlation weight of each group.

In some implementations, referring to Fig. 5, step S1023 is further performed after step S1022.

S1023, for each processing device to be analyzed, determining the correlation between the processing device to be analyzed and the defect to be analyzed according to a sum of the sub-correlation weight of the first group and the sub-correlation weight of the second group.

That is, the sum of the sub-correlation weights of the above two groups may be subsequently calculated as a total correlation weight, which is used as a parameter representing the correlation between the processing device to be analyzed and the defect to be analyzed, and is output to the display device.

In some implementations, alternatively, referring to Fig. 6, step 1024 is performed after step S1022.

S 1024, for each processing device to be analyzed, determining a value parameter according to the sub-correlation weight of the first group and the sub-correlation weight of the second group, and determining the correlation between the processing device to be analyzed and the defect to be analyzed according to the value parameter.

That is, the value parameter representing influence of the processing device to be analyzed on the defect to be analyzed can be further calculated according to the sub-correlation weights, and the value parameter is taken as a parameter representing the correlation between the processing device to be analyzed and the defect to be analyzed, and is output to the display device.

In some implementations, the value parameter J is calculated by the following formula:

$$J_i = (DG_i - DB_i) * Q_i = \left( \frac{G_i}{G_{total}} - \frac{B_i}{B_{total}} \right) * \ln\left( \frac{G_i / G_{total}}{B_i / B_{total}} \right);$$

$$J = \sum J_i, \text{ and}$$

where Qi is the sub-correlation weight of the $i^{th}$ group, i is 1 or 2, DGi is a proportion of the products with the defect to be analyzed in the $i^{th}$ group to all the products with the defect to be analyzed, DBi is a proportion of the products without the defect to be analyzed in the $i^{th}$ group to all the products without the defect to be analyzed, Gi is the number of the products with the defect to be analyzed, $G_{total}$ is the number of all the products with the defect to be analyzed, Bi is the number of the products without the defect to be analyzed in the $i^{th}$ group, and $B_{total}$ is the number of all the products without the defect to be analyzed.

The above value parameter can be further calculated according to the sub-correlation weights Qi of the groups (certainly, substantially also can obtained from $G_i$, $G_{total}$, $B_i$, $B_{total}$).

The value parameter may also represent influence capability of a variable (e.g., whether the processing device participates in the production procedure of the product) on a result (e.g., whether the product has the defect), and specifically, the greater the value parameter is, the greater the influence capability is.

In actual production environment of a factory, the number of the products may vary from thousands to hundreds of thousands, and for needs of the factory, no matter what magnitude the actual number of the products is, it is very important to analyze the cause of the defect, and thus in many cases, the correlation weight can be used to represent the correlation.

With respect to the correlation weight, the value parameter can better adapt to different data volumes, and can be used as a supplement to the correlation weight.

For example, the value parameter can be used as a further basis for determining which processing device to be analyzed has a relative larger correlation when correlation weights of two processing device to be analyzed are the same or very close to each other.

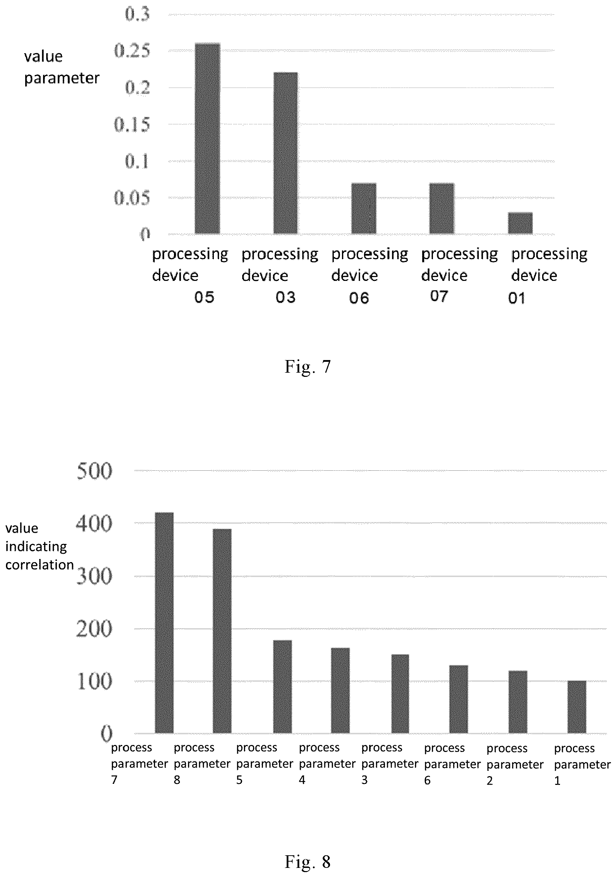

For example, value parameters of a portion of the processing devices to be analyzed may be as shown in Fig. 7.

In some implementations, the present step (S102) includes: determining at least a portion of the processing devices as the processing devices to be analyzed corresponding to the defect to be analyzed according to a preset corresponding relation.

Obviously, a certain type of defect can be caused only by some processing devices, but is independent of or has low correlation with other processing devices, for example, a color filter process defect of a display panel cannot be caused by processing devices for array processes (such as processing device for etching data lines). That is, it is considered that there is no correlation between some processing devices and some defects (i.e., the correlation there-between is 0), and thus it is meaningless to analyze the correlation between these processing devices and these defects.

In view of above, a corresponding relation may be predetermined (e.g., based on expert opinions), and includes a plurality of types of defects and processing devices associated with the defects. Therefore, when a certain defect is to be analyzed, the processing devices possibly related to the defect to be analyzed can be determined to be the processing devices to be analyzed according to the corresponding relation, and only the processing devices to be analyzed are analyzed to reduce an amount of computation.

Referring to Figs. 5 and 6, in some implementations, step S103 is further performed after acquiring the production record from the production data stored in the distributed storage device (S101).

S103, determining, by a preset machine learning model, the correlation between at least a portion of process parameters of at least a portion of the processing devices and the defect to be analyzed according to the production record.

When the production record includes the process parameter, the correlation between the process parameter of the processing device and the defect to be analyzed can be analyzed through a machine learning model, namely, by taking the process parameters as variables, a degree of influence on probability of the product having the defect to be analyzed due to varying of values (parameter values) of the variables is analyzed; and the correlation between the process parameters and the defect to be analyzed is further transmitted to the display device.

Exemplarily, the correlation of a portion of process parameters may be as shown in Fig. 8. It should be understood that the "numerical value representing the correlation" in the figure is only a result calculated by the machine learning model and representing a relative magnitude of the correlation, and is not necessarily the actual probability or the like.

"Machine Learning" is one of artificial intelligence techniques, which obtains a machine learning model by performing machine learning (training) on an initial preset model, and the machine learning model processes a specific problem.

In some implementations, a process of obtaining the machine learning model may include feature engineering, model selection, model parameter adjustment, model evaluation, and the like.

The feature engineering is a process of preprocessing initial data to fit it to the model, which exemplarily and particularly can use algorithms including, but not limited to, Dummy (redundant) coding, numerical type data normalization, Pearson correlation analysis, and the like.

The model selection refers to selecting an appropriate type of model, and in some implementations, the machine learning model includes any one of a random forest model, a gradient boost tree (GBDT) model, and an XGBoost (eXtreme Gradient boost) model.

The model parameter adjustment is also called "training", which refers to a process of inputting existing data into a model for processing, and adjusting parameters in the model according to a result of the processing. Exemplary algorithms for adjusting parameters specifically include, but not limited to, automated parameter search methods such as Grid Search, Random Search, and the like.

The model evaluation is a process of evaluating a trained model to determine if it has met requirements for a practical application.

It should be understood that the present step (S103) may be performed after the step (S101) of acquiring the production record, and there is no necessary order relationship between the steps S102 and S103.

In some implementations, the present step (S103) includes: determining the processing device to be analyzed, which has a correlation with the defect to be analyzed greater than a first preset value or ranked before a first preset position, as a key processing device to be analyzed, and only determining the correlation between at least the portion of process parameters of the key processing device to be analyzed and the defect to be analyzed.

After determining the correlation between the processing device to be analyzed and the defect to be analyzed (S 102), a portion of the processing devices to be analyzed having a relative higher correlation with the defect to be analyzed (e.g., the processing devices to be analyzed having value parameters greater than a predetermined value or being ranked at top pre-determined positions) may be selected as key processing devices to be analyzed, so that only the correlation between the key processing device to be analyzed and the defect to be analyzed is analyzed to reduce an amount of computation.

The embodiment of the present disclosure, referring to Figs. 5 and 6, after step S103, further includes:

S104, determining a recommended parameter value range for at least a portion of the process parameters according to the correlation between the process parameters and the defect to be analyzed.

In some implementations, after determining the correlation between the process parameter and the defect to be analyzed, what range of value of the process parameter resulting in a relative low probability of causing the defect to be analyzed may be further analyzed, and the range is taken as a recommended parameter value range, and the recommended parameter value range is provided to the display device, so that the user can optimize the process parameter.

In some implementations, the present step (S104) includes: determining the process parameter which has a correlation with the defect to be analyzed greater than a second preset value or ranked before a second preset position, as a key process parameter, and only determining the recommended parameter value range of the key process parameter.

That is, according to the correlation between the process parameter and the defect to be analyzed, a portion of the process parameters with a relative higher correlation with the defect to be analyzed (for example, the process parameter with the correlation greater than a predetermined value or ranked at a predetermined position) may be selected as the key process parameters, so that only the correlation between the key process parameters and the defect to be analyzed can be analyzed to reduce an amount of computation.

In some implementations, the present step (S104) includes: for each process parameter of which the recommended parameter value range needs to be determined, respectively counting statistical probabilities that the product processed by the processing device corresponding to the process parameter in the production procedure has the defect to be analyzed when the parameter value of the process parameter is within a plurality of preset ranges respectively, and determining a preset range corresponding to the minimum statistical probability as the recommended parameter value range of the process parameter.

In order to determine the recommended parameter value range, a plurality of preset ranges can be selected from possible value ranges of each process parameter, probabilities (statistical probabilities) that the product processed by the processing device has the defect to be analyzed when the value of the process parameter is respectively in the preset ranges are respectively counted, and the preset range resulting in a lowest statistical probability is used as the recommended parameter value range of the process parameter.

In some implementations, the preset ranges of each process parameter may be non-overlapping, but a union of the preset ranges is equal to a possible value range of the process parameter. For example, if the possible value range of a certain process parameter is [A, C] (unit is not shown), the preset ranges corresponding to the possible value range may be [A, B1), [B1, B2), [B2, B3) ...... [Bn, C]. For example, the above preset ranges may be obtained by equally dividing the possible value range of the process parameter, or may be set manually.

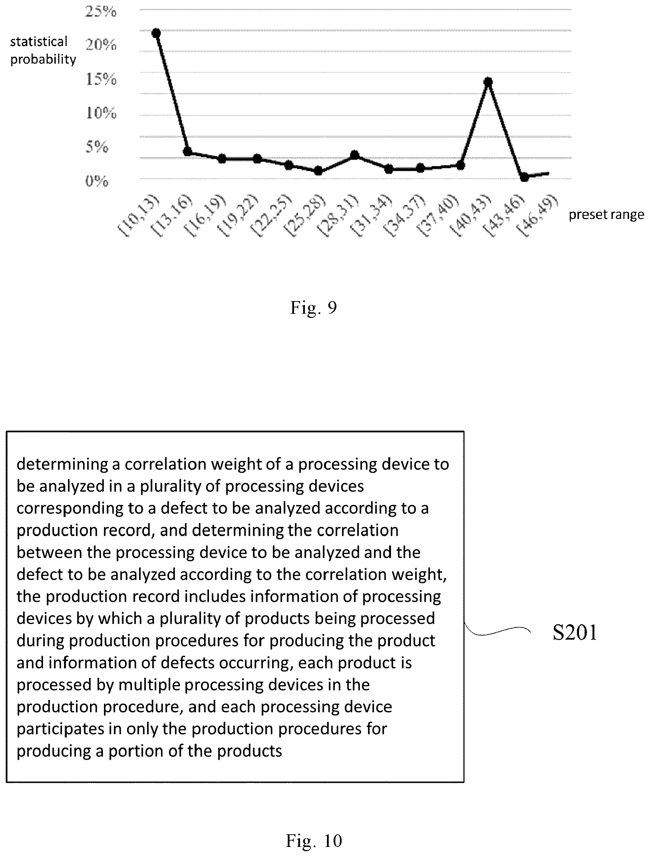

For example, referring to Fig. 9, the statistical probability that the product processed by the processing device has the defect to be analyzed when the parameter value of the process parameter is within the preset ranges respectively is shown. It can be seen from Fig. 9 that when the parameter value of the process parameter is within [43, 46) (unit is not shown), the statistical probability is lowest, and thus the range [43, 46) can be used as the recommended parameter value range.

Certainly, other ways of determining the recommended parameter value range may be used. For example, a particular machine learning model may be selected such that the recommended parameter value range is given directly by the machine learning model.

In a second aspect, referring to Fig. 10, an embodiment of the present disclosure provides a method for analyzing cause of product defect, including:

S201, determining a correlation weight of a processing device to be analyzed in a plurality of processing devices corresponding to a defect to be analyzed according to a production record, and determining the correlation between the processing device to be analyzed and the defect to be analyzed according to the correlation weight. The production record includes information of processing devices by which a plurality of products being processed during production procedures for producing the product and information of defects occurring, each product is processed by multiple processing devices in the production procedure, and each processing device participates in only the production procedures for producing a portion of the products.

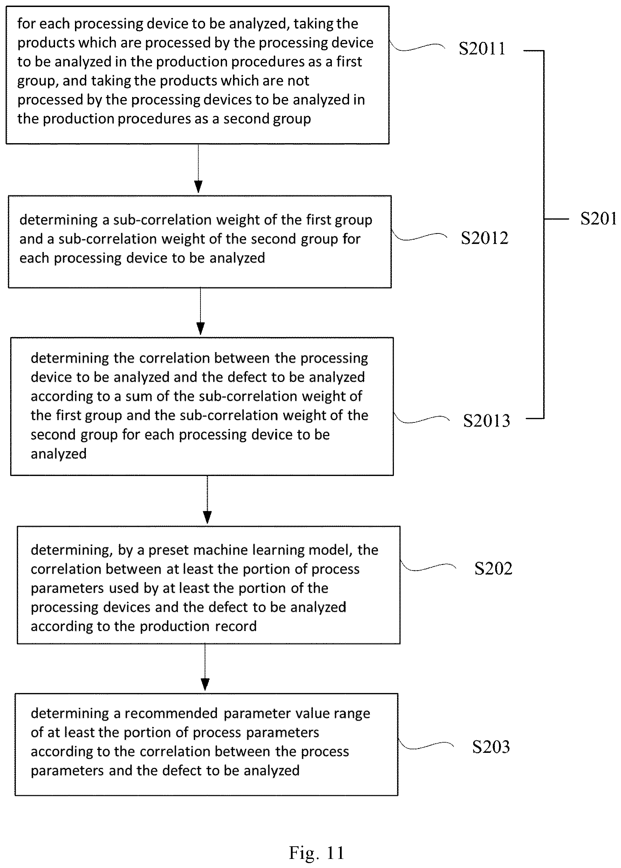

In some implementations, referring to Fig. 11, the determining the correlation weight of the processing device to be analyzed in the processing devices corresponding to the defect to be analyzed, and determining the correlation between the processing device to be analyzed and the defect to be analyzed according to the correlation weight (S201) includes:

S2011, for each processing device to be analyzed, taking the products which are processed by the processing device to be analyzed in the production procedures as a first group, and taking the products which are not processed by the processing devices to be analyzed in the production procedures as a second group;

S2012, determining a sub-correlation weight of the first group and a sub-correlation weight of the second group for each processing device to be analyzed;

S2013, determining the correlation between the processing device to be analyzed and the defect to be analyzed according to a sum of the sub-correlation weight of the first group and the sub-correlation weight of the second group for each processing device to be analyzed.

In some implementations, the sub-correlation weight Qi of the $i^{th}$ group is calculated by the following formula:

$$Q_i = \ln\left(\frac{G_i/G_{total}}{B_i/B_{total}}\right);$$

where i is 1 or 2, Gi is the number of the products with the defect to be analyzed in the $i^{th}$ group, $G_{total}$ is the number of all the products with the defect to be analyzed, Bi is the number of the products without the defect to be analyzed in the $i^{th}$ group, and $B_{total}$ is the number of all the products without the defect to be analyzed.

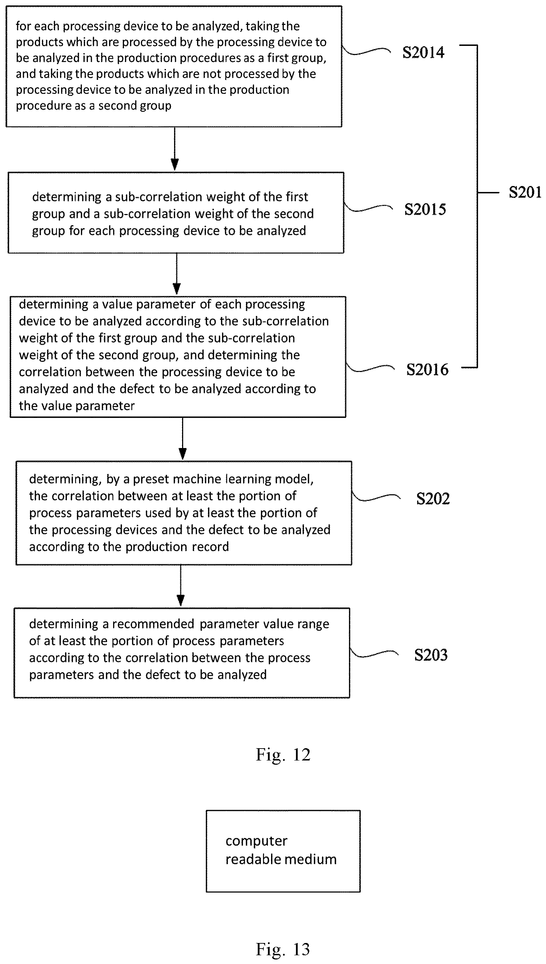

In some implementations, referring to Fig. 12, as another implementation of the embodiment of the present disclosure, the determining the correlation weight of the processing device to be analyzed in the processing devices corresponding to the defect to be analyzed, and determining the correlation between the processing device to be analyzed and the defect to be analyzed according to the correlation weight (S201) includes:

S2014, for each processing device to be analyzed, taking the products which are processed by the processing device to be analyzed in the production procedures as a first group, and taking the products which are not processed by the processing device to be analyzed in the production procedure as a second group;

S2015, determining a sub-correlation weight of the first group and a sub-correlation weight of the second group for each processing device to be analyzed;

S2016, determining a value parameter of each processing device to be analyzed according to the sub-correlation weight of the first group and the sub-correlation weight of the second group, and determining the correlation between the processing device to be analyzed and the defect to be analyzed according to the value parameter;

the value parameter J is calculated bv the following formula:

$$J = \sum J_i \text{, and } J_i = \left(DG_i - DB_i\right) * Q_i;$$

$J = \sum J_i$, and $J_i = (DG_i - DB_i)*Q_i$.

where Qi is the sub-correlation weight of the $i^{th}$ group, i is 1 or 2, DGi is a proportion of the products with the defect to be analyzed in the $i^{th}$ group to all the products with the defect to be analyze, and DBi is a proportion of the products without the defect to be analyzed in the $i^{th}$ group to all the products without the defect to be analyzed.

In some implementations, the production record further includes: parameter values of at least a portion of process parameters used by at least a portion of the processing devices, by which the product is processed in the production procedure, for processing the product.

In some implementations, referring to Figs. 11 and 12, the method further includes:

S202, determining, by a preset machine learning model, the correlation between at least the portion of process parameters used by at least the portion of the processing devices and the defect to be analyzed according to the production record.

In some implementations, referring to Figs. 11 and 12, in some implementations, after determining the correlation between at least the portion of process parameters used by at least the portion of the processing devices and the defect to be analyzed (S202), the method further includes:

S203, determining a recommended parameter value range of at least the portion of process parameters according to the correlation between the process parameters and the defect to be analyzed.

In a third aspect, referring to Fig. 13, an embodiment of the present disclosure provides a computer readable medium storing a computer program, which, when being executed by a processor, implements the method for analyzing cause of product defect described above.

Ordinary skills in the art will appreciate that all or some of steps, functional modules/units in the system, the device disclosed above may be implemented as software, firmware, hardware, and suitable combinations thereof.

In a hardware implementation, a division between the functional modules/units mentioned in the above description does not necessarily correspond to a division of physical components; for example, one physical component may have multiple functions, or one function or step may be performed by several physical components in cooperation.

Some or all of the physical components may be implemented as software executed by a processor, such as a Central Processing Unit (CPU), digital signal processor, or microprocessor, or as hardware, or as an integrated circuit, such as an application specific integrated circuit. Such software may be distributed on the computer readable medium, which may include computer storage medium (or non-transitory medium) and communication medium (or transitory medium). The term computer storage medium includes volatile and nonvolatile, removable and non-removable medium implemented in any method or technology for storage of information such as computer readable instructions, data structures, program modules or other data, as well known to those skilled in the art. The computer storage medium includes, but is not limited to, random access memory (RAM, more specifically SDRAM, DDR, etc.), Read Only Memory (ROM), Electrically Erasable Programmable Read Only Memory (EEPROM), FLASH memory (FLASH), or other disk storage; compact disk read only memory (CD-ROM), Digital Versatile Disk (DVD), or other optical disk storage; magnetic cassettes, magnetic tape, magnetic disk storage or other magnetic storage; any other medium which can be used to store desired information and capable of being accessed by a computer. In addition, the communication medium typically includes computer readable instructions, data structures, program modules or other data in a modulated data signal such as in a carrier wave or other transport mechanism and includes any information delivery medium as well known to those skilled in the art.

The present disclosure has disclosed example embodiments, and although specific terms are employed, they are used and should be interpreted in a generic and descriptive sense only and not for purposes of limitation. In some instances, features, characteristics and/or elements described in conjunction with a particular embodiment may be used alone or in combination with features, characteristics and/or elements described in conjunction with other embodiments, unless expressly stated otherwise, as would be apparent to those skilled in the art. It will, therefore, be understood by those skilled in the art that various changes in form and details may be made therein without departing from the scope of the present disclosure as set forth in the appended claims.

**Claims**

1. A system for analyzing cause of product defect, comprising: a distributed storage device, an analysis device, and a display device, wherein,

   the distributed storage device is configured to store production data generated by a factory device;
   the analysis device includes one or more processors configured to perform following operations to determine a correlation:
   acquiring a production record from the production data stored by the distributed storage device; the production record comprises information of processing devices by which a plurality of products are processed during the production procedures for producing the products and information of defects occurring, wherein each of the products is processed by multiple ones of the processing devices during the production procedure, and each of the processing devices participates in only the production procedures for production a portion of the products;
   determining a correlation weight of the processing device to be analyzed in the processing devices corresponding to the defect to be analyzed according to the production record, and determining a correlation between the processing device to be analyzed and the defect to be analyzed according to the correlation weight;
   the display device is configured to display an analysis result of the analysis device.

2. The system of claim 1, wherein the determining the correlation weight of the processing device to be analyzed in the processing devices corresponding to the defect to be analyzed comprises:

   for each processing device to be analyzed, taking the products which are processed by the processing device to be analyzed in the production procedure as a first group, and taking the products which are not processed by the processing device to be analyzed in the production procedure as a second group;
   for each of the processing device to be analyzed, determining a sub-correlation weight of the first group and a sub-correlation weight of the second group.

3. The system of claim 2, wherein the sub-correlation weight $Q_i$ of the $i^{th}$ group is calculated by a formula:

$$Q_i = \ln\left(\frac{G_i / G_{total}}{B_i / B_{total}}\right);$$

wherein i is 1 or 2, $G_i$ is the number of the products with the defect to be analyzed in the $i^{th}$ group, $G_{total}$ is the number of all the products with the defect to be analyzed, $B_i$ is the number of the products without the defect to be analyzed in the $i^{th}$ group, and $B_{total}$ is the number of all the products without the defect to be analyzed.

4. The system of claim 2, wherein the determining the correlation between the processing device to be analyzed and the defect to be analyzed according to the correlation weight comprises:
for each processing device to be analyzed, determining the correlation between the processing device to be analyzed and the defect to be analyzed according to a sum of the sub-correlation weight of the first group and the sub-correlation weight of the second group.

5. The system of claim 2, wherein the determining the correlation between the processing device to be analyzed and the defect to be analyzed according to the correlation weight comprises:
for each processing device to be analyzed, determining a value parameter according to the sub-correlation weight of the first group and the sub-correlation weight of the second group, and determining the correlation between the processing device to be analyzed and the defect to be analyzed according to the value parameter.

6. The system of claim 5, wherein the value parameter J is calculated by the formula:

$$J = \sum J_i \text{, and } J_i = \left(DG_i - DB_i\right) * Q_i;$$

where $Q_i$ is the sub-correlation weight of the $i^{th}$ group, i is 1 or 2, $DG_i$ is a proportion of the products with the defect to be analyzed in the $i^{th}$ group to all the products with the defect to be analyzed, and $DB_i$ is a proportion of the products without the defect to be analyzed in the $i^{th}$ group to all the products without the defect to be analyzed.

7. The system of claim 1, wherein the determining the correlation weight of the processing device to be analyzed in the processing devices corresponding to the defect to be analyzed comprises:
determining at least a portion of the processing devices as the processing devices to be analyzed corresponding to the defect to be analyzed according to a preset corresponding relation.

8. The system of claim 1, wherein the production record further comprises: parameter values of at least a portion of process parameters used by at least a portion of the processing devices, by which the product is processed during the production procedure, for processing the product;
after acquiring the production record from the production data stored in the distributed storage device, a preset machine learning model is configured to perform: determining the correlation between at least the portion of process parameters used by at least the portion of the processing devices and the defect to be analyzed, according to the production record.

9. The system of claim 8, wherein the machine learning model comprises any one of a random forest model, a gradient lifting tree model and an XGboost model.

10. The system of claim 8, wherein the determining the correlation between at least the portion of process parameters used by at least the portion of the processing devices and the defect to be analyzed is performed during determining the correlation between the processing device to be analyzed and the defect to be analyzed according to the correlation weight;
the determining the correlation between at least the portion of process parameters used by at least the portion of the processing devices and the defect to be analyzed comprises: determining the processing device to be analyzed, which has a correlation with the defect to be analyzed greater than a first preset value or ranked before a first preset position, as a key processing device to be analyzed, and only determining the correlation between at least the portion of process parameters of the key processing device to be analyzed and the defect to be analyzed.

11. The system of claim 8, wherein after the determining the correlation between at least the portion of process parameters used by at least the portion of the processing devices and the defect to be analyzed, determining a recommended parameter value range of at least the portion of process parameters according to the correlation between the process parameters and the defect to be analyzed.

12. The system of claim 11, wherein the determining the recommended parameter value range of at least the portion of process parameters comprises:
determining the process parameter which has a correlation with the defect to be analyzed greater than a second preset value or ranked before a second preset position, as a key process parameter, and only determining the recommended parameter value range of the key process parameter.

13. The system of claim 1, wherein the product is a display panel.

14. A method for analyzing cause of product defect, comprising:
determining a correlation weight of a processing device to be analyzed in a plurality of processing devices corresponding to a defect to be analyzed according to a production record, and determining a correlation between the processing device to be analyzed and the defect to be analyzed according to the correlation weight; the production record comprises information of processing devices by which a plurality of products are processed during production procedures and information of defects occurring, wherein each of the products is processed by multiple ones of the processing devices during the production procedure, and each of the processing devices participates in only the production procedures for producing a portion of the products.

15. The method of claim 14, wherein the determining the correlation weight of the processing device to be analyzed in the processing devices corresponding to the defect to be analyzed, and determining the correlation between the processing device to be analyzed and the defect to be analyzed according to the correlation weight comprises:

for each processing device to be analyzed, taking the products which are processed by the processing device to be analyzed in the production procedures as a first group, and taking the products which are not processed by the processing device to be analyzed in the production procedures as a second group;
for each of the processing device to be analyzed, determining a sub-correlation weight of the first group and a sub-correlation weight of the second group;
for each processing device to be analyzed, determining the correlation between the processing device to be analyzed and the defect to be analyzed according to a sum of the sub-correlation weight of the first group and the sub-correlation weight of the second group.

16. The method of claim 15, wherein the sub-correlation weight Qi of the $i^{th}$ group is calculated by the following formula:

$$Q_i = \ln\left(\frac{G_i/G_{total}}{B_i/B_{total}}\right);$$

where i is 1 or 2, Gi is the number of the products with the defect to be analyzed in the $i^{th}$ group, $G_{total}$ is the number of all the products with the defect to be analyzed, Bi is the number of the products without the defect to be analyzed in the $i^{th}$ group, and $B_{total}$ is the number of all the products without the defect to be analyzed.

17. The method of claim 14, wherein the determining the correlation weight of the processing device to be analyzed in the processing devices corresponding to the defect to be analyzed, and determining the correlation between the processing device to be analyzed and the defect to be analyzed according to the correlation weight comprises:

for each processing device to be analyzed, taking the products which are processed by the processing device to be analyzed in the production procedures as a first group, and taking the products which are not processed by the processing device to be analyzed in the production procedures as a second group;
for each of the processing device to be analyzed, determining a sub-correlation weight of the first group and a sub-correlation weight of the second group;
for each processing device to be analyzed, determining a value parameter according to the sub-correlation weight of the first group and the sub-correlation weight of the second group, and determining the correlation between the processing device to be analyzed and the defect to be analyzed according to the value parameter; the value parameter J is calculated by the following formula:

$$J = \sum J_i \text{, and } J_i = \left( DG_i - DB_i \right) * Q_i;$$

where $Q_i$ is the sub-correlation weight of the $i^{th}$ group, i is 1 or 2, $DG_i$ is a proportion of the products with the defect to be analyzed in the $i^{th}$ group to all the products with the defect to be analyzed, and $DB_i$ is a proportion of the products without the defect to be analyzed in the $i^{th}$ group to all the products without the defect to be analyzed.

18. The method of claim 14, wherein the production record further comprises: parameter values of at least a portion of process parameters used by at least a portion of the processing devices, by which the product is processed during the production procedure, for processing the product;
the method further comprises:
determining, by a preset machine learning model, the correlation between at least the portion of process parameters used by at least the portion of the processing devices and the defect to be analyzed, according to the production record.

19. The method of claim 18, further comprises:
after the determining the correlation between at least the portion of process parameters used by at least the portion of the processing devices and the defect to be analyzed, determining a recommended parameter value range of at least the portion of process parameters according to the correlation between the process parameters and the defect to be analyzed.

20. A computer readable medium storing a computer program, which, when being executed by a processor, implements the method for analyzing cause of product defect according to any one of claims 14 to 19.

distributed storage device

display device

analysis device

system for analyzing cause of product defect

Fig. 1

I/O interface

processor

memory

analysis device

Fig. 2

display device
(interaction
interface)

API interface                API interface

Original data of
factory device

YMS
FDC
MES
（Oracle
database）

data mart

device analysis
scene
parameter
analysis scene

analysis device

data warehouse

production
record theme

detection data
theme

device data
theme

data lake

distributed storage device

Fig. 3

acquiring a production record from the
production data stored in the distributed storage
device

S101

determining a correlation weight of the processing
device to be analyzed in the processing devices
corresponding to the defect to be analyzed
according to the production record, and
determining the correlation between the
processing device to be analyzed and the defect to
be analyzed according to the correlation weight

S102

Fig. 4

```
┌─────────────────────────────────────────┐
│ acquiring a production record from the   │
│ production data stored in the            │      S101
│ distributed storage device               │
└─────────────────────────────────────────┘
                    │
                    ▼
┌─────────────────────────────────────────┐
│ for each processing device to be         │
│ analyzed, taking the products which are  │
│ processed by the processing device to be │
│ analyzed in the production procedures as  │    S1021
│ a first group, and taking the products   │
│ which are not processed by the           │
│ processing device to be analyzed in the  │
│ production procedures as a second group  │
└─────────────────────────────────────────┘
                    │
                    ▼
┌─────────────────────────────────────────┐
│ for each processing device to be         │
│ analyzed, determining a sub-correlation  │      S1022
│ weight of the first group and a sub-     │                S102
│ correlation weight of the second group   │
└─────────────────────────────────────────┘
                    │
                    ▼
┌─────────────────────────────────────────┐
│ for each processing device to be         │
│ analyzed, determining the correlation    │
│ between the processing device to be      │
│ analyzed and the defect to be analyzed   │      S1023
│ according to a sum of the sub-           │
│ correlation weight of the first group    │
│ and the sub-correlation weight of the    │
│ second group                             │
└─────────────────────────────────────────┘
                    │
                    ▼
┌─────────────────────────────────────────┐
│ determining, by a preset machine         │
│ learning model, the correlation between  │
│ at least a portion of process parameters │      S103
│ of at least a portion of the processing  │
│ devices and the defect to be analyzed    │
│ according to the production record       │
└─────────────────────────────────────────┘
                    │
                    ▼
┌─────────────────────────────────────────┐
│ determining a recommended parameter      │
│ value range for at least a portion of    │
│ the process parameters according to the  │      S104
│ correlation between the process          │
│ parameters and the defect to be analyzed │
└─────────────────────────────────────────┘
```

Fig. 5

| acquiring a production record from the production data stored in the distributed storage device | S101 |

| for each processing device to be analyzed, taking the products which are processed by the processing device to be analyzed in the production procedures as a first group, and taking the products which are not processed by the processing device to be analyzed in the production procedures as a second group | S1021 |

| for each processing device to be analyzed, determining a sub-correlation weight of the first group and a sub-correlation weight of the second group | S1022 |

S102

| for each processing device to be analyzed, determining a value parameter according to the sub-correlation weight of the first group and the sub-correlation weight of the second group, and determining the correlation between the processing device to be analyzed and the defect to be analyzed according to the value parameter | S1024 |

| determining, by a preset machine learning model, the correlation between at least a portion of process parameters of at least a portion of the processing devices and the defect to be analyzed according to the production record | S103 |

| determining a recommended parameter value range for at least a portion of the process parameters according to the correlation between the process parameters and the defect to be analyzed | S104 |

Fig. 6

Fig. 7

Fig. 8

Fig. 9

determining a correlation weight of a processing device to be analyzed in a plurality of processing devices corresponding to a defect to be analyzed according to a production record, and determining the correlation between the processing device to be analyzed and the defect to be analyzed according to the correlation weight, the production record includes information of processing devices by which a plurality of products being processed during production procedures for producing the product and information of defects occurring, each product is processed by multiple processing devices in the production procedure, and each processing device participates in only the production procedures for producing a portion of the products

S201

Fig. 10

for each processing device to be analyzed, taking the products which are processed by the processing device to be analyzed in the production procedures as a first group, and taking the products which are not processed by the processing devices to be analyzed in the production procedures as a second group

S2011

determining a sub-correlation weight of the first group and a sub-correlation weight of the second group for each processing device to be analyzed

S2012

S201

determining the correlation between the processing device to be analyzed and the defect to be analyzed according to a sum of the sub-correlation weight of the first group and the sub-correlation weight of the second group for each processing device to be analyzed

S2013

determining, by a preset machine learning model, the correlation between at least the portion of process parameters used by at least the portion of the processing devices and the defect to be analyzed according to the production record

S202

determining a recommended parameter value range of at least the portion of process parameters according to the correlation between the process parameters and the defect to be analyzed

S203

Fig. 11

for each processing device to be analyzed, taking the products which are processed by the processing device to be analyzed in the production procedures as a first group, and taking the products which are not processed by the processing device to be analyzed in the production procedure as a second group — S2014

determining a sub-correlation weight of the first group and a sub-correlation weight of the second group for each processing device to be analyzed — S2015

determining a value parameter of each processing device to be analyzed according to the sub-correlation weight of the first group and the sub-correlation weight of the second group, and determining the correlation between the processing device to be analyzed and the defect to be analyzed according to the value parameter — S2016

— S201

determining, by a preset machine learning model, the correlation between at least the portion of process parameters used by at least the portion of the processing devices and the defect to be analyzed according to the production record — S202

determining a recommended parameter value range of at least the portion of process parameters according to the correlation between the process parameters and the defect to be analyzed — S203

Fig. 12

computer readable medium

Fig. 13

## INTERNATIONAL SEARCH REPORT

| International application No. |
| --- |
| **PCT/CN2019/121907** |

**A.  CLASSIFICATION OF SUBJECT MATTER**

G06Q 10/06(2012.01)i

According to International Patent Classification (IPC) or to both national classification and IPC

**B.  FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

WPI, EPODOC, CNPAT, CNTXT, CNKI, IEEE: 产品, 生产, 记录, 数据, 不良, 缺陷, 分析, 设备, 相关性, 权, 机器, 学习, produc+, manufacture, record, log, data, defect, analy+, device, apparatus, relat+, weight, machine, learning

**C.  DOCUMENTS CONSIDERED TO BE RELEVANT**

| Category* | Citation of document, with indication, where appropriate, of the relevant passages | Relevant to claim No. |
| --- | --- | --- |
| X | CN 109711659 A (CHENGDU SHUZHILIAN TECHNOLOGY CO., LTD.) 03 May 2019 (2019-05-03) description paragraphs [0004], [0040]-[0060] | 1-20 |
| A | CN 103530467 A (CHINA ACADEMY OF ORDNANCE SCIENCE) 22 January 2014 (2014-01-22) entire document | 1-20 |
| A | CN 104123298 A (HUAWEI TECHNOLOGIES CO., LTD.) 29 October 2014 (2014-10-29) entire document | 1-20 |
| A | CN 107295068 A (ZHENJIANG SYD TECHNOLOGY CO., LTD.) 24 October 2017 (2017-10-24) entire document | 1-20 |
| A | US 2006048010 A1 (TAI, Hung-En et al.) 02 March 2006 (2006-03-02) entire document | 1-20 |

☐ Further documents are listed in the continuation of Box C.      ☑ See patent family annex.

| | |
| --- | --- |
| \*    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **18 August 2020** | **26 August 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
|---|
| **PCT/CN2019/121907** |

| Patent document cited in search report | | | Publication date (day/month/year) | Patent family member(s) | Publication date (day/month/year) |
|---|---|---|---|---|---|
| CN | 109711659 | A | 03 May 2019 | None | |
| CN | 103530467 | A | 22 January 2014 | None | |
| CN | 104123298 | A | 29 October 2014 | None | |
| CN | 107295068 | A | 24 October 2017 | None | |
| US | 2006048010 | A1 | 02 March 2006 | None | |

Form PCT/ISA/210 (patent family annex) (January 2015)